# EUROPÄISCHE PATENTSCHRIFT

(11) **EP 3 717 218 B1**
(45) Veröffentlichungstag und Bekanntmachung des Hinweises auf die Patenterteilung: **30.06.2021**
(21) Anmeldenummer: 18829315.3
(22) Anmeldetag: 18.12.2018
(51) Int. Cl.: B29D 22/02, B29L 31/00, B29C 35/08

(54) **VERFAHREN ZUR HERSTELLUNG EINES BALGES**
METHOD FOR PRODUCING A BELLOWS
PROCÉDÉ DE FABRICATION D'UN SOUFFLET

(30) Priorität: 15.01.2018 DE 102018100764
(43) Veröffentlichungstag der Anmeldung: 07.10.2020
(73) Patentinhaber: GKN Driveline International GmbH, 53797 Lohmar (DE)
(72) Erfinder: STRESEWSKI, Thorsten, 50677 Koln (DE); WETTE, Joachim, 53773 Hennef (DE); REHER, Frank, 53721 Siegburg (DE); BENDER, Bernd, 50858 Köln (DE)
(74) Vertreter: Geskes, Christoph
(86) Internationale Anmeldenummer: PCT/EP2018/085423
(87) Internationale Veröffentlichungsnummer: WO 2019/137753

(56) Entgegenhaltungen:
- EP-A1- 1 295 698
- WO-A1-92/20731
- DE-A1-102006 017 346
- DE-A5-112006 003 257
- US-A1- 2011 277 867
- US-A1- 2015 041 839
- US-A1- 2016 331 073

## Beschreibung

Die vorliegende Erfindung betrifft ein Verfahren zur Herstellung eines Balges aus einer Mischung umfassend mindestens ein thermoplastisches Elastomer als auch einen mittels dieses Verfahrens hergestellten Balg.

Gattungsgemäße Bälge, insbesondere Rollbälge und Faltenbälge, dienen zur Abdichtung von Bauteilen. Diese finden insbesondere auch Anwendung bei der Abdichtung von Gelenken im Automobilbau. Gattungsgemäße Bälge weisen einen ersten Bund mit einem größeren Durchmesser zur Befestigung auf einem Bauteil, beispielsweise einem Gelenkaußenteil eines Drehgelenks, und einen zweiten Bund mit einem in aller Regel kleineren Durchmesser zur Befestigung an einem weiteren Bauteil, beispielsweise einer Welle, auf. Zwischen dem ersten, größeren Bund und dem zweiten Bund ist ein Balgwandbereich angeordnet, der im Fall eines Rollbalges in etwa halbtorusförmig ausgebildet ist, und im Fall eines Faltenbalges in aller Regel einen konisch ausgebildeten, auf jeden Fall ziehharmonikaähnlichen Faltenbereich aufweist. Der Faltenbereich kann aber auch Falten gleichen Durchmessers aufweisen und daher in etwa zylindrisch ausgebildet sein, ggf. auch nur über eine Teillänge desselben. Rollbälge werden insbesondere bei Gelenkkonstruktionen eingesetzt, die bei hohen Drehzahlen hohe Beugewinkel und eine Verschiebung zulassen. Faltenbälge werden insbesondere bei Gleichlaufgelenken eingesetzt. Im Betriebszustand, insbesondere bei höheren Drehzahlen und größeren Beugewinkeln, tritt im Balg eine Wärmeentwicklung auf, wodurch die mechanische Festigkeit des Balgmateriales abnimmt. Insbesondere die Zugspannungs- und Dehnungseigenschaften der Bälge nehmen bei höherer Temperatur ab. Insbesondere bei fortschrittlichen Gelenkkonstruktionen, wie diese durch die Elektromobilisierung des Automobilbaus vorangetrieben werden, und den damit verbundenen hohen Drehzahlen werden die an Bälge gestellten Anforderungen erhöht. Gerade bei längeren Laufzeiten und höheren Drehzahlen erhöhen sich die im Betriebszustand am Balg vorliegenden Temperaturen erheblich, so dass es zu Materialschädigungen kommt.

Die WO 98/38435 A1 versucht, das Problem für einen Rollbalg zu lösen, indem dieser im Spritzgieß- oder Blasformverfahren aus einem thermoplastischen Elastomer, welches zu einem Grad zwischen 15 % und 85 % irreversibel vernetzt ist, hergestellt wird. Die irreversible Vernetzung kann dabei durch chemische oder thermische Verfahren erfolgen, aber auch durch Bestrahlung mit ß- oder γ-Strahlen am fertigen Rollbalg. Mit dem in der WO 98/38435 A1 beschriebenen Verfahren können zwar erfolgreich Rollbälge hergestellt werden, welche Temperaturen von bis zu 100°C im Dauerbetrieb mit Spitzentemperaturen von bis zum 120°C widerstehen können, ohne das die Materialeigenschaften bzw. die Zugspannungs- und Dehnungseigenschaften des Rollbalges abnehmen. In Hinblick auf moderne, fortschrittlichere Gelenkkonstruktionen, insbesondere für Elektromotoren mit deren hohen Drehzahlen ist jedoch das dort beschriebene Verfahren bzw. der mittels diesem hergestellte Rollbalg nicht ausreichend temperaturbeständig.

Eine hierzu alternative Lösung ist in der DE 11 2006 003 257 B4 offenbart, welche ein Verfahren zur Herstellung von Bälgen aus einem thermoplastischen elastomeren Material vorschlägt, wobei vor Formung des Balges das Material irreversibel zumindest teilweise vernetzt wird, wobei das irreversibel vernetzte Material vor Formung mit Ausgangsmaterial vermischt wird und die Mischung maximal 70 Gew.-% des irreversibel vernetzten Materiales enthält. Durch die dort offenbarte irreversible Vernetzung des thermoplastisch elastomeren Materiales vor Formung des Balges soll vorteilhafterweise erreicht werden, dass die aus dem derart behandelten Material hergestellten Faltenbälge gleichmäßige Eigenschaften, insbesondere bei einer Serienproduktion, aufweisen. Nachteile, die bei einer nachträglichen Vernetzung, wie aus der WO 98/38435 A1 bekannt, auftreten, sollen hierdurch vermieden werden. Die Vernetzung erfolgt dabei chemisch und/oder thermisch und/oder durch Strahlen. Die Strahlenenergie beträgt mindestens etwa 0,5 MeV. Aber auch durch das in der DE 11 2006 003 257 B4 offenbarte Verfahren können nicht Bälge hergestellt werden, welche den Anforderungen moderner Gelenkkonstruktionen und den dabei insbesondere bei hohen Drehzahlen auftretenden erhöhten Temperaturen gerecht werden.

Es besteht daher ein Bedarf, ein Verfahren zur Herstellung eines Balges zur Verfügung zu stellen, mittels welchem die aus dem Stand der Technik bekannten Nachteile vermieden und insbesondere Bälge zur Verfügung gestellt werden, die sehr hohen Betriebstemperaturen Stand halten. Es ist daher Aufgabe der vorliegenden Erfindung, ein Verfahren zur Herstellung eines Balges aus einer Mischung umfassend mindestens ein thermoplastisches Elastomer zur Verfügung zu stellen, mittels welchem hochtemperaturstabile Balge hergestellt werden können, die insbesondere in modernen Gelenkkonstruktionen einsetzbar sind und eine erhöhte Lebensdauer aufweisen.

Diese Aufgabe wird erfindungsgemäß gelöst durch ein Verfahren zur Herstellung eines Balges aus einer Mischung umfassend mindestens ein thermoplastisches Elastomer, ausgewählt aus der Gruppe der Copolyester mit einem harten Segment und einem weichen Segment, wobei in einem ersten Schritt das mindestens eine thermoplastische Elastomer mit etwa 0,8 Gew.-%, bevorzugt mit etwa 1,2 Gew.-%, bis etwa 5 Gew.-%, weiter bevorzugt mit etwa 1,4 Gew.-% bis etwa 3,5 Gew.-%, noch weiter bevorzugt bis etwa 3 Gew.-%, und noch weiter bevorzugt mit etwa 1,5 Gew.-%, und noch weiter bevorzugt mit etwa 1,85 Gew.-%, bis etwa 2,7 Gew.-%, Triallylisocyanurat, bezogen jeweils auf die Gesamtmenge der Mischung, gemischt wird; in einem zweiten Schritt der Balg hergestellt wird; und der Balg in einem dritten Schritt einer ionisierenden Strahlung in einer Dosis in einem Bereich von etwa 140 kGy bis etwa 350 kGy, bevorzugt in einem Bereich von etwa 190 kGy bis etwa 260 kGy, weiter bevorzugt in einem Bereich von etwa 150 kGy bis etwa 250 kGy, weiter bevorzugt in einem Bereich von etwa 205 kGy bis etwa 320 kGy, noch weiter bevorzugt in einem Bereich zwischen etwa 220 kGy und etwa 280 kGy, und noch weiter bevorzugt von etwa 170 kGy bis etwa 220 kGy, ausgesetzt wird. Die Verfahrensführung erfolgt dabei derart, dass das Balgmaterial aus mindestens einem thermoplastischen Elastomer nach Aussetzung mit einer ionisierenden Strahlung wie auch vorher einen Schmelzbereich und damit Eigenschaften eines Elastomers aufweist. In einer bevorzugten Ausführungsform des erfindungsgemäßen Verfahrens wird Triallylisocyanurat in einer Menge in einem Bereich von etwa 1,85 Gew.-% bis etwa 2,6 Gew.-%, weiter bevorzugt in einer Menge in einem Bereich von etwa 2 Gew.-% bis etwa 2,5 Gew.-%, jeweils bezogen auf die Gesamtmenge der Mischung, eingesetzt. Bevorzugt besteht die Mischung aus mindestens einem, weiter bevorzugt aus genau einem, thermoplastischen Elastomer und Triallylisocyanurat in den vorstehend definierten verschiedenen Mengenbereichen, bevorzugt in einer Menge in einem Bereich von etwa 1,85 Gew.-% bis etwa 2,6 Gew.-%, weiter bevorzugt in einer Menge in einem Bereich von etwa 2 Gew.-% bis etwa 2,5 Gew.-%, jeweils bezogen auf die Gesamtmenge der Mischung. Durch den Zusatz des als chemisches und/oder thermisches Vernetzungsreagenz wirkenden Triallylisocyanurats in den genannten engen Gewichtsprozentbereichen desselben in der Gesamtmischung zur Herstellung des Balges werden vorteilhafterweise und auch überraschenderweise in Verbindung mit der Bestrahlung auch bei Temperaturen von 150°C Laufzeiten von über 100 h bei Drehzahlen von beispielsweise 4.800 rpm unter Beugung von 7° und bei 140°C Laufzeiten gar von über 500h bei Drehzahlen von 6.000 rpm unter Beugung von 3° erreichbar, die ohne Zusatz des Triallylisocyanurats nicht erzielbar sind, auch nicht durch eine reine Bestrahlung mit hohen Energiedosen, auch Energiedosen, die höher als 250 kGy sind. Insbesondere bei einer Mischung des mindestens einen thermoplastischen Elastomers mit Triallylisocyanurat in einer Menge von etwa 1,75 Gew.-% bis etwa 2,5 Gew.-% lassen sich Laufzeiten bei einer Strahlungsdosis, bevorzugt in einem Bereich von etwa 180 kGy, weiter bevorzugt von etwa 190 kGy, bis etwa 260 kGy, noch weiter bevorzugt in einem Bereich von etwa 190 kGy bis etwa 220 kGy, und noch weiter bevorzugt in einem Bereich von etwa 190 kGy bis etwa 210 kGy, erzielen, die denjenigen entsprechen bzw. höher sind als solche mit einer doppelt so hohen Zugabe an Triallylisocyanurat. Insbesondere liegen die Laufzeiten im Vergleich zu identischen Zugaben an Triallylisocyanurat in die Mischung umfassend mindestens ein thermoplastisches Elastomer um etwa 30 % bis etwa 400 %, teilweise bis etwa 800%, höher im Vergleich zu Bälgen, die ohne Bestrahlung hergestellt werden oder aber mit Strahlungsdosen von weniger als 140 kGy bestrahlt wurden. Es ist überraschend, dass in einem relativ engen Bereich betreffend die Menge an zugesetztem Triallylisocyanurat in Verbindung mit einem relativ engen Bereich für die Dosis der ionisierenden Strahlung derart vorteilhafte hohe Laufzeiten bei Temperaturen über 140°C erzielbar sind. Der Balg wird in der bevorzugten Ausführungsform des erfindungsgemäßen Verfahrens vollständig, also im Ganzen, der ionisierenden Strahlung ausgesetzt. In einer alternativen Ausführungsform der vorliegenden Erfindung wird nur der Faltenbereich eines Balges der ionisierenden Strahlung ausgesetzt, jedoch nicht die beiden sich an den Faltenbereich anschließenden Bundbereiche, die der Befestigung des Balges dienen.

Bälge im Sinne der vorliegenden Erfindung sind bevorzugt Rollbälge und Faltenbälge. Der grundsätzliche Aufbau derselben ist im Zusammenhang mit der Darlegung des Standes der Technik bereits beschrieben worden. Besonders bevorzugt weisen Rollbälge im Sinne der vorliegenden Erfindung äußere Verstärkungsrippen auf, die zwischen dem ersten, größeren Bundbereich und der als halbtorusförmig anzusprechenden Balgwandung angeordnet sind. Diese sind in etwa senkrecht zu einer zentralen Mittelachse des Rollbalges umlaufend angeordnet, bevorzugt mindestens acht solcher Verstärkungsrippen, weiter bevorzugt mindestens 12, und noch weiter bevorzugt mindestens 16 solcher Verstärkungsrippen. Der erste, größere Bundbereich und der zweite, kleinere Bundbereich können unterschiedlich ausgestaltet sein. Insbesondere können sie den Gegebenheiten der zu verbindenden Bauteile angepasst sein. So können der erste und der zweite Bundbereich im Bereich eines jeweiligen Bindersitzes auf deren Unterseite zugewandt einem Bauteil mindestens eine umlaufende Ausnehmung in Form einer Ringnut aufweisen, welche mindestens einen entsprechenden Ringwulst, angeordnet auf einer Außenfläche des Bauteils, aufnimmt. Insbesondere kann ein Bindersitzbereich des ersten, größeren Bundbereiches vor einer Endkante eines Bauteiles enden, jedoch auch über eine Endkante eines Bauteiles hinaus verlängert sein. Auch kann vorgesehen sein, dass in einer weiter bevorzugten Ausführungsform alternativ oder aber zusätzlich zu den äußeren Verstärkungsrippen innere Verstärkungsrippen angeordnet sind, die an der Innenseite der halbtorusförmigen Balgwandung zumindest teilweise angreifen, ausgehend von einem Übergangsbereich zwischen dem ersten, größeren Bundbereich und der halbtorusförmigen Balgwandung, die als Faltenbereich eines Rollbalges angesprochen werden kann. Rollbälge mit inneren bzw. äußeren Verstärkungsrippen sind beispielsweise aus der WO 2009/155956 A1 bekannt, deren Offenbarung hiermit zum Gegenstand der vorliegenden Anmeldung betreffend die Ausgestaltung der inneren und äußeren Verstärkungsrippen gemacht wird. Der dem ersten, größeren Bundbereich zugeordnete erste Bindersitzbereich für ein Bindermittel und der dem zweiten, kleineren Bundbereich zugeordnete zweite Bindersitzbereich für ein Bindermittel kann im Übrigen Begrenzungen aufweisen in Form von umlaufenden Wandungen, ohrförmigen Vorsprüngen o. ä., um ein Abrutschen des Bindermittels zu vermeiden. Das Bindermittel kann beispielsweise als Kompressionsband o. ä. ausgebildet sein.

Ähnlich wie vorstehend im Zusammenhang mit Rollbälgen beschrieben sind der erste, in aller Regel größere Bundbereich und der zweite, kleinere Bundbereich bei einem Faltenbalg im Sinne der vorliegenden Erfindung ausgebildet. Der Faltenbalg weist bevorzugt eine sich konisch von einem ersten, größeren Bundbereich auf den zweiten, kleineren Bundbereich verjüngenden Balgwandungsbereich, ausgebildet als Faltenbereich, auf. Jedoch können auch Faltenbalge vorgesehen sein, deren erster Bundbereich und zweiter Bundbereich einen etwa gleichen Durchmesser aufweisen, so dass der zwischen diesen angeordnete Balgwandungsbereich bzw. Faltenbereich nicht konisch verjüngend vom ersten Bundbereich zum zweiten Bundbereich, sondern eher zylinderförmig ausgebildet ist. Der Balgwandungsbereich bzw. Faltenbereich bei einem Faltenbalg im Sinne der vorliegenden Erfindung kann auf unterschiedlichste Weise ausgebildet sein. Insbesondere kann der Balgwandungsbereich mindestens zwei Falten, bevorzugt mindestens vier Falten, weiter bevorzugt mindestens sechs oder mehr Falten aufweisen mit zwischen diesen angeordneten Faltentälern und ansonsten Faltenspitzen. Dabei kann auch vorgesehen sein, dass eine oder mehrere Falten, beispielsweise drei oder vier Falten, einen gleichen Innendurchmesser, bezogen auf deren Faltenspitzen, aufweisen, so dass der ansonsten als konusförmig ausgebildet anzusprechende Faltenbereich über einen Teilbereich eher zylinderförmig ausgebildet ist. Ein solcher zylinderförmiger Abschnitt eines Faltenbereiches ist bevorzugt zu dem zweiten, kleineren Bundbereich hin angeordnet bzw. grenzt unmittelbar an diesen an. Es kann auch vorgesehen sein, dass in Faltentälern eine umlaufende Rippe vorgesehen ist, welche beispielsweise einen konisch verlaufenden Teil eines Faltenbereiches von einem zylindrisch verlaufenden Teil eines Faltenbereiches trennt.

Besonders bevorzugt im Sinne der vorliegenden Erfindung können ein Rollbalg bzw. ein Faltenbalg ausgebildet sein zur Anordnung auf einem Gelenkgehäuse, wobei das Gelenkgehäuse auch eine trilobe Außenkontur aufweisen kann. In diesem Fall kann der erste Bundbereich des Rollbalges bzw. Faltenbalges derart ausgebildet sein, dass er der Außenkontur eines solchen trilob ausgebildeten Gelenkgehäuses folgt, dabei jedoch gleichwohl eine radial umlaufende Bindersitzfläche für ein Bindermittel zur Verfügung stellt. Alternativ können auch Adapter vorgesehen sein, so dass der erste Bundbereich des Rollbalges bzw. Faltenbalges im Querschnitt gesehen ringförmig ausgebildet sein kann. Besonders bevorzugt ist ein Faltenbalg im Sinne der vorliegenden Erfindung dazu geeignet, bei einem Gleichlaufgelenk eingesetzt zu werden. Besonders bevorzugt ist ein Rollbalg im Sinne der vorliegenden Erfindung dazu geeignet und wird verwendet, um bei Gelenken mit hohen Drehzahlen eingesetzt zu werden, insbesondere bei Drehgelenken, welche keine allzu hohe Ablenkung erfahren.

Soweit in der vorliegenden Erfindung der Begriff "etwa" oder "im Wesentlichen" im Zusammenhang mit Werten, Wertebereichen oder werthaltigen Begriffen verwendet wird, versteht hierunter der angesprochene Fachmann dasjenige, was dieser in dem gegebenen Zusammenhang als fachmännisch üblich ansehen wird. Insbesondere sind Abweichungen der angegebenen Werte, Wertebereiche oder werthaltigen Begriffe von +/- 10 %, bevorzugt +/-5 %, weiter bevorzugt +/- 2 %, von dem Begriff "etwa" oder "im Wesentlichen" umfasst. Soweit verschiedene Bereiche für Mengenangaben in Bezug auf Bestandteile und Definitionen, zum Beispiel von physikalisch-chemischen Eigenschaften, der im erfindungsgemäßen Verfahren einsetzbaren Mischung und derer Bestandteile in der vorliegenden Erfindung angegeben sind, sind die Untergrenzen und die Obergrenzen der verschiedenen Bereiche in Bezug auf den jeweiligen Bestandteil und auf die jeweilige Definition miteinander kombinierbar. Thermoplastische Elastomere im Sinne der vorliegenden Erfindung sind thermoplastische Copolyester mit harten Segmenten und weichen Segmenten, die auch als thermoplastische Block-Copolyester angesprochen werden können. In diesen liegen die Hartsegmente und die Weichsegmente scharf getrennt im Molekül vor. Ab einer gewissen Temperatur entmischen sich derartige thermoplastische Elastomere in einer kontinuierlichen und in einer diskontinuierlichen Phase, wobei bei Unterschreitung der Glasübergangstemperatur T_{g} der diskontinuierlichen Phase diese als Vernetzungspunkt wirkt. Besonders bevorzugt im Sinne der vorliegenden Erfindung sind solche thermoplastischen Block-Copolyester, welche eine Härte in einem Bereich zwischen etwa 25 Shore D und etwa 75 Shore D aufweisen. Weiter bevorzugt sind solche thermoplastischen Copolyester, welche eine mittlere Molmasse M_{w} in einem Bereich von etwa 80.000 bis etwa 200.000, weiter bevorzugt in einem Bereich von etwa 100.000 bis etwa 150.000, aufweisen. Besonders bevorzugt weisen die thermoplastischen Block-Copolyester eine Zugfestigkeit gemäß ASTM D638 in der zum Zeitpunkt der Anmeldung der vorliegenden Erfindung geltenden Fassung in einem Bereich von etwa 10 MPa bis etwa 50 MPa, weiter bevorzugt in einem Bereich von etwa 15 MPa bis etwa 40 MPa, auf. Nicht von der Mischung umfasst sind Thermoplaste, da diese im verarbeiteten Zustand nicht die notwendigen elastomeren Eigenschaften, die für einen Balg, insbesondere einen Faltenbalg oder einen Rollbalg, insbesondere für Automobile notwendig sind, aufweisen und die an diese gestellten Anforderungen nicht erfüllen.

Besonders bevorzugt im Sinne der vorliegenden Erfindung umfasst das weiche Segment des mindestens einen thermoplastischen Elastomers Einheiten von zwei bis acht Kohlenstoffatomen, bevorzugt Einheiten von drei bis sechs Kohlenstoffatomen, insbesondere sich wiederholende Einheiten dieser Art. Besonders bevorzugt ist das weiche Segment des mindestens einen thermoplastischen Elastomers ein Polyester, ausgewählt aus der Gruppe der Alkylenoxide mit zwei bis acht Kohlenstoffatomen, bevorzugt drei bis sechs Kohlenstoffatomen. Besonders bevorzugt ist das weiche Segment gebildet aus Polytetramethylenoxid-Einheiten, bevorzugt mindestens einer solchen Polytetramethylenoxid-Einheit, bevorzugt mindestens zwei, bevorzugt mindestens vier solcher Einheiten. Die Einheiten mit zwei bis acht Kohlenstoffatomen sind im weichen Segment weiter bevorzugt verbunden mit einer Terephthalat-Einheit. Das Polytetramethylenoxid kann auch als Polytetramethylenglycolether bezeichnet werden.

Bevorzugt im Sinne der vorliegenden Erfindung ist das harte Segment des mindestens einen thermoplastischen Elastomerethers ausgewählt aus einer Gruppe umfassend Polybutylenterephthalat und Polyethylenterephthalat, und ist besonders bevorzugt Polybutylenterephthalat. Ganz besonders bevorzugt im Sinne der vorliegenden Erfindung ist das mindestens eine thermoplastische Elastomer gebildet aus Hartsegmenten aus Polybutylenterephthalat und Weichsegmenten aus Polymethylenoxid mit einer Terephthalat-Einheit, wobei das weiche Segment auch als Polytetramethylenglycoletherterephthalat bezeichnet werden kann. Ganz besonders bevorzugt im Sinne der vorliegenden Erfindung umfasst die Mischung, aus welcher der Balg hergestellt wird, genau ein thermoplastisches Elastomer, ganz besonders bevorzugt das vorstehend genannte.

Die Mischung zur Herstellung des Balges kann neben dem mindestens einen, bevorzugt genau einem thermoplastischen Elastomer, besonders bevorzugt einem solchen wie vorstehend beschrieben, und dem als chemisches und/oder thermisches Vernetzungsmittel dienenden Triallylisocyanurat weitere Bestandteile umfassen. Diese sind ausgewählt aus einer Gruppe umfassend Farbstoffe einschließlich Ruß, Stabilisationsmittel, insbesondere für das temperaturempfindliche Triallylisocyanurat, Verarbeitungshilfen, Modifikatoren, Antioxidantien, und/oder Katalysatoren. Besonders bevorzugt besteht die Mischung ausschließlich auf mindestens einem, weiter bevorzugt genau einem, thermoplastischen Elastomer, insbesondere einem solchen, wie vorstehend beschrieben, und Triallyisocyanurat. Mischungen mehrerer thermoplastischer Elastomere sind bevorzugt zu vermeiden, da hierdurch ungleichmäßige Materialeigenschaften auftreten können, oder aber insbesondere die Festigkeitswerte herabgesetzt werden.

Die Herstellung der Mischung im ersten Schritt erfolgt beispielsweise durch einen Taumelmischer. Bevorzugt liegt das mindestens eine thermoplastische Elastomer und das Triallylisocyanurat in Granulatform vor, so dass diese in handelsüblichen Mischern, wie eben beispielsweise einem Taumelmischer, einfach zur vermischen sind, bis eine homogene Mischung entsteht. Das Triallylisocyanurat wird bevorzugt bei der Compoundierung der Mischung zugesetzt, d.h. also das thermoplastische Elastomer wird vorgelegt und anschließend das Triallylisocyanurat sowie gegebenenfalls sonstige Zuschlagsstoffe, wie Ruß oder Stabilisationsmittel, letztere in geringen Mengen, zugegeben. Es kann aber auch vorgesehen sein, dass während einer Polymerisation der die harten und weichen Segmente des thermoplastischen Elastomeren bildenden Ausgangsmaterialien zumindest das Triallylisocyanurat und gegebenenfalls auch Zuschlagsstoffe, zugegeben werden, so dass unter Umständen ein nachfolgender Compoundierungsschritt unterbleiben kann. Es kann dabei aber auch vorgesehen werden, dass nur ein Teil des Triallylisocyanurats und/oder der Zuschlagsstoffe im Polymerisierungsschritt zugegeben werden, und nachfolgend in einem Compoundierungsschritt das restliche Triallylisocyanurat und/oder die restlichen Zuschlagsstoffe. Bevorzugt wird zumindest ein Teil der vorgesehenen Menge an Triallylisocyanurat dem mindestens einen, bevorzugt genau einem thermoplastischen Elastomer während dessen Polymerisierung zugegeben. Es kann auch vorgesehen sein, dass im Polymerisierungsschritt nur die Zuschlagsstoffe vollständig oder nur das Triallylisocyanurat vollständig und in einem nachfolgenden Compoundierungsschritt entweder die Zuschlagsstoffe vollständig oder das Triallylisocyanurat vollständig zugegeben wird. Der Begriff Zuschlagstoffe, wie er vorstehend benutzt ist, umfasst einen oder mehrere der oben genannten Bestandteile. Besonders bevorzugt wird eine Vormischung aus mindestens einem thermoplastischen Elastomer, weiter bevorzugt aus genau einem thermoplastischen Elastomer, mit Triallylisocyanurat hergestellt. Eine solche Vormischung umfasst etwa 10 Gew.-% bis etwa 50 Gew.-% Triallylisocyanurat, bezogen auf die Gesamtmenge der Vormischung, und etwa 50 bis etwa 90 Gew.-% des mindestens einen thermoplastischen Elastomeren, bevorzugt genau eines thermoplastischen Elastomeren, genauer eines thermoplastischen Block-Copolyesters, wie weiter vorstehend beschrieben, ebenfalls bezogen auf die Gesamtmenge der Vormischung. Die Vormischung kann zum Beispiel in einem Taumelmischer bis zum Erhalt einer homogenen Mischung hergestellt werden, wobei auch höhere Temperaturen als die übliche Raumtemperatur von etwa 25°C gewählt werden können. Nachfolgend wird diese Vormischung mit dem weiteren mindestens einen thermoplastischen Elastomer versetzt zur Herstellung der Gesamtmischung. Besonders bevorzugt ist dabei das mindestens eine thermoplastische Elastomer und das für die Herstellung der Vormischung verwendete mindestens eine thermoplastische Elastomer identisch, bevorzugt wird jeweils genau ein thermoplastisches Elastomer, weiter bevorzugt genau ein thermoplastischer Block-Copolyester, eingesetzt, der in der Vormischung und bei Erstellung der Mischung zur Herstellung des Balges identisch ist.

Triallylisocyanurat, auch als Triallyl-s-triazin t-2,4,6 (1H,3H,5H)-trion bezeichnet, ist ein trifunktionelles polymerisierbares Monomer, welches als Vernetzungskomponente für das mindestens eine thermoplastische Elastomer in der Mischung zur Herstellung des Balges im erfindungsgemäßen Verfahren dient. Verschiedene Herstellungsverfahren für Triallylisocyanurat sind beschrieben in der DE 10 2006 032 167 B4.

Die Herstellung des Balges im zweiten Schritt des erfindungsgemäßen Verfahrens erfolgt vorzugsweise mittels Pressblower-Spritzblasverfahren, Spritzextrusionsverfahren, Spritzgussverfahren, Spritzpressverfahren und/oder Extrusionsblasverfahren. Besonders bevorzugt ist die Herstellung durch Spritzgussverfahren, besonders bevorzugt dann, wenn der herzustellende Balg ein Rollbalg ist. Die Herstellung des Balges im zweiten Schritt erfolgt im Sinne der vorliegenden Erfindung vorzugsweise bei einer Temperatur in einem Bereich von etwa 170°C bis etwa 250°C, weiter bevorzugt bei einer Temperatur in einem Bereich von etwa 200°C bis etwa 250°C. Bei Einsatz eines Einfach- oder Doppelschneckenextruders zur Herstellung eines Balges in einem Spritzgussverfahren wird dabei vorteilhafterweise die Temperatur der im Extruder befindlichen Mischung in Richtung auf die Austragsdüse hin erhöht, und liegt bei Austrag bevorzugt in einem Bereich von etwa 230°C bis etwa 250°C. Wird mittels des erfindungsgemäßen Verfahrens ein Faltenbalg hergestellt, so wird dieser bevorzugt im Pressblower-Spritzblasverfahren hergestellt, wobei die Verarbeitungstemperaturen der eingesetzten Mischung denjenigen entsprechen, die vorstehend im Zusammenhang mit dem Spritzgussverfahren zur Herstellung von Rollbälgen genannt sind.

Bevorzugt erfolgt die Aussetzung im dritten Schritt mit mindestens einem ionisierenden Strahl mit einer Energie in einem Bereich von etwa 5 MeV bis etwa 15 MeV, weiter bevorzugt in einem Bereich von etwa 6 MeV bis etwa 12 MeV. Es hat sich gezeigt, dass bei einem derartigen Energieeintrag eine ausreichende Vernetzung in einem relativ kurzen Zeitraum erfolgt, so dass die Bälge mit dem erfindungsgemäßen Verfahren sinnvoll im industriellen Maßstab hergestellt werden können.

Besonders bevorzugt erfolgt die Aussetzung im dritten Schritt mit mindestens einem ionisierenden Strahl schrittweise in Strahlungsdosen von etwa 20 kGy bis etwa 40 kGy, weiter bevorzugt mit Strahlungsdosen in einem Bereich von etwa 25 kGy bis etwa 36 kGy. Die Aussetzung erfolgt solange, bis eine Strahlungsdosis in einem Bereich von etwa 140 kGy bis etwa 350 kGy, bevorzugt in einem Bereich von etwa 190 kGy bis etwa 260 kGy, weiter bevorzugt in einem Bereich von etwa 150 kGy bis etwa 250 kGy, noch weiter bevorzugt in einem Bereich von etwa 205 kGy bis etwa 320 kGy, und noch weiter bevorzugt in einem Bereich von etwa 220 kGy und etwa 280 kGy und in einem Bereich von etwa 160 kGy bis etwa 220 kGy, erreicht wird. Bei einer Bestrahlung mit derartigen Strahlungsdosen hat sich vorteilhafterweise erwiesen, dass die hergestellten Bälge ausreichend hohe Laufzeiten, insbesondere solche von über 100 h, bei erhöhten Temperaturen von beispielsweise 150°C erreichen können, die den Anforderungen an moderne Gelenkkonstruktionen nachkommen. Ein Einsatz geringerer Strahlungsdosen als den vorstehend genannten Gesamtstrahlungsdosen führt in aller Regel nicht zu Laufzeiten von über 100 h bei erhöhten Temperaturen von etwa 150°C. Die schrittweise Aussetzung mit Strahlungsdosen im Sinne der vorliegenden Erfindung weist den Vorteil auf, dass hierdurch eine möglichst gleichmäßige Vernetzung des schon fertig hergestellten Balges erfolgen kann, so dass Materialunterschiede keine Rolle spielen und daher hohe Lebensdauern, insbesondere hohe Laufzeiten, der solchermaßen hergestellten Bälge erhalten werden können.

Als ionisierende Strahlung wird vorzugsweise Elektronenstrahlung eingesetzt. Aber auch der Einsatz hierzu alternativer Strahlenquellen wie Röntgen-Strahlung, γ-Strahlung, α-Strahlung oder kurzwellige Ultraviolett-Strahlung ist möglich.

Zwischen den einzelnen Schritten zur Erhöhung der Strahlungsdosis werden vorteilhafterweise Pausen in einem Zeitraum zwischen etwa 1 sec und etwa 60 min, ggf. auch länger, vorgesehen. Weiter bevorzugt kann zum Beispiel mit einer Elektronenstrahlvorrichtung gearbeitet werden, welche mehr als einen Elektronenstrahl verwendet, insbesondere eine solche, welche den bereits fertig hergestellten Balg von sämtlichen Seiten gleichzeitig oder aber von oben in verschiedenen Winkeln mit Elektronenstrahlen bestrahlt. Eine derartige Vorrichtung kann beispielsweise vier, acht oder mehr Elektronenstrahlen aussenden. Bei Einsatz mehrerer Elektronenstrahlen gelten die vorstehend genannten Werte für die Gesamtdosis als auch für ein schrittweises Vorgehen der Aussetzung für alle Elektronenstrahlen zusammen.

Anhand von GPC-Messungen wurde festgestellt, dass durch die Aussetzung mit mindestens einem Elektronenstrahl im dritten Schritt des erfindungsgemäßen Verfahrens eine Vernetzung des mindestens einen thermoplastischen Elastomers erfolgt. Je höher die Energiedosis, je stärker ist dabei die Vernetzung, dass heißt der Vernetzungsgrad ist höher. Die mittels des erfindungsgemäßen Verfahrens hergestellten Bälge weisen eine ausreichende Härte für den Einsatz insbesondere im Automobilbau bei Gelenkwellen auf, wobei im Vergleich zu Bälgen, welche nicht bestrahlt wurden gemäß dem erfindungsgemäßen dritten Schritt, die mittels DSC (Differential scanning calorimetry) ermittelte Schmelzenthalpie eines fertig hergestellten Rollbalges bei einem Gehalt an Triallylisocyanurat von etwa 1,5 Gew.-% bis etwa 4 Gew.-%, bezogen auf die Gesamtmenge der eingesetzten Mischung, erniedrigt ist. Bei einer Strahlendosis von 100 kGy liegt sie bei 2,25 Gew.-% Triallylcyanurat bei etwa 20,4J/g, bei 150 kGy bei etwa 17,8 J/g, und bei 200 kGy bei etwa 17,4 J/g. Die Schmelztemperatur wiederum ist nur relativ geringfügig herabgesetzt im Vergleich zu den nicht elektronenbestrahlten Bälgen, so dass die erfindungsgemäß hergestellten Bälge Anforderungen an erhöhte Temperaturen im Einsatz erfüllen. Die elektronenbestrahlten Bälge weisen wie auch die unbestrahlten einen Schmelzbereich auf und weisen elastomere Eigenschaften auf. Eine Umwandlung zu z.B. Duroplasten erfolgt nicht. Das Verfahren wird so geführt, dass der bestrahlte Balg weiterhin elastomere Eigenschaften aufweist. Die mittlere Zugfestigkeit, bestimmt gemäß ISO 37:2011, der erfindungsgemäß hergestellten Bälge lag in einem Bereich zwischen etwa 37 mPa und etwa 40 mPa.

In einer besonders bevorzugten Ausführungsform des erfindungsgemäßen Verfahrens zur Herstellung eines Balges aus einer Mischung ist mindestens ein, bevorzugt genau ein, thermoplastisches Elastomer eingesetzt, ausgewählt aus der Gruppe der Copolyester mit einem harten Segment und einem weichen Segment, wobei bevorzugt das weiche Segment gebildet aus Polytetramethylenoxid-Einheiten, bevorzugt mindestens einer solchen Polytetramethylenoxid-Einheit, bevorzugt mindestens zwei, bevorzugt mindestens vier solcher Einheiten, ist, und wobei das harte Segment ausgewählt aus einer Gruppe bestehend aus Polybutylenterephthalat und Polyethylenterephthalat ist, wobei in einem ersten Schritt das mindestens eine thermoplastische Elastomer mit etwa 1,85 Gew.-%, bis etwa 2,6 Gew.-% Triallylisocyanurat, bezogen auf die Gesamtmenge der Mischung, gemischt wird; in einem zweiten Schritt der Balg hergestellt wird; und der gesamte Balg in einem dritten Schritt einer ionisierenden Strahlung in einer Dosis in einem Bereich von etwa 190 kGy bis etwa 260 kGy, bevorzugt in einem Bereich von etwa 220 kGy und etwa 280 kGy, ausgesetzt wird, wobei die Aussetzung mit ionisierender Strahlung schrittweise, bevorzugt in Strahlungsdosen von etwa 20 kGy bis etwa 40 kGy, erfolgt.

Die vorliegende Erfindung betrifft weiterhin einen Balg, insbesondere einen Faltenbalg oder einen Rollbalg, besonders bevorzugt einen Rollbalg, hergestellt gemäß des erfindungsgemäßen Verfahrens. Der Rollbalg ist dabei bevorzugt ausgebildet wie weiter vorstehend beschrieben und weist insbesondere äußere Verstärkungsrippen auf. Der erfindungsgemäße Balg weist die vorteilhaften, vorstehend beschriebenen Eigenschaften auf und kann Laufzeiten von über 100 h bei erhöhten Temperaturen von etwa 150°C überstehen und zeigt damit unter Belastung Eigenschaften, die im Vergleich zu den aus dem Stand der Technik bekannten Faltenbalgen deutlich verbessert sind. Grund hierfür dürfte die unterschiedliche Art der Vernetzung sein, die einmal bei der Herstellung des Balges im zweiten Schritt durch das bereits zugesetzte Triallylisocyanurat erfolgt und weiter fortgesetzt wird durch die im dritten Schritt erfolgende Aussetzung mit ionisierenden Strahlen, bevorzugt Elektronenstrahlen.

Die vorliegende Erfindung wird an den folgenden Beispielen näher erläutert. Es zeigen:
- Fig. 1:: eine Messung der Laufzeit in Abhängigkeit von der eingesetzten Menge an Triallylisocyanurat bei unterschiedlichen Elektronenstrahldosen; und
- Fig. 2:: eine Messung der Laufzeit in Abhängigkeit von der Strahlungsdosis bei unter-schiedlichen Temperaturen.

Zunächst wurde ein üblicher Rollbalg mit äußeren Verstärkungsrippen zur Befestigung an einem Gelenkgehäuse einerseits und einer Welle andererseits hergestellt aus Mischungen eines thermoplastischen Block-Copolyesters mit Polybutylenterephthalat als harte Segmente und Polytetramethylenglycoletherterephthalat als weiche Segmente.

Zunächst wurde eine Vormischung hergestellt aus 15 Gew.-% Triallylisocyanurat und 85 Gew.-% des vorstehend beschriebenen thermoplastischen Block-Copolyesters, wobei die Mengen jeweils bezogen sind auf die Gesamtmenge der Vormischung. Hieraus wurden dann Mischungen mit einem Gehalt an Triallylisocyanurat von 0 Gew.-%, 1,5 Gew.-%, 2,25 Gew.-%, 3 Gew.-%, 3,75 Gew.-% und 4,5 Gew.-%, jeweils bezogen auf die Gesamtmenge der zur Herstellung des Balges eingesetzten Mischung, hergestellt, und durch ein Spritzgussverfahren, beispielsweise unter Einsatz eines Einschneckenextruders, der Rollbalg hergestellt. Die Austragstemperatur an der Düse des Schneckenextruders betrug dabei etwa 245°C.

Nachfolgend erfolgte eine Elektronenbestrahlung mit einer Elektronenstrahlvorrichtung mit acht Elektronenstrahlen, die gleichmäßig auf die gesamte äußere Oberfläche des Rollbalg von oben her verteilt ausgerichtet waren, um einen gleichmäßigen Energieeintrag sicherzustellen. Der Energieeintrag erfolgte mit 10 MeV in Strahlungsdosen von etwa 33 kGy, bis die Gesamtstrahlungsdosen von 100 kGy, 150 kGy und 200 kGy erreicht waren. Die solchermaßen hergestellten Rollbalge wurden dann unter Betriebsbedingungen getestet, um deren Laufzeit zu ermitteln. Die Laufzeit wurde dabei bei einer Abwinkelung beziehungsweise Beugung von 7°, einer Temperatur von 150°C und bei einer Drehzahl von 4.800 rpm ermittelt. Dabei wurden die erfindungsgemäß hergestellten Bälge auf einem Gleichlaufgelenk montiert und mit Fett gefüllt. Bei Auftreten eines Fettverlustes oder aber Feststellung anderer Materialermüdungserscheinungen wie insbesondere Knickbildungen oder Faltenbildungen wurde der Test abgebrochen. Dabei wurde ein Einlaufen mit einer Drehzahl von 1.000 rpm über eine Zeitspanne von etwa 30 min durchgeführt und anschließend linear die Drehzahl auf 4.800 rpm erhöht. Es wurden jeweils zwei Balge mit einer spezifischen Zusammensetzung getestet.

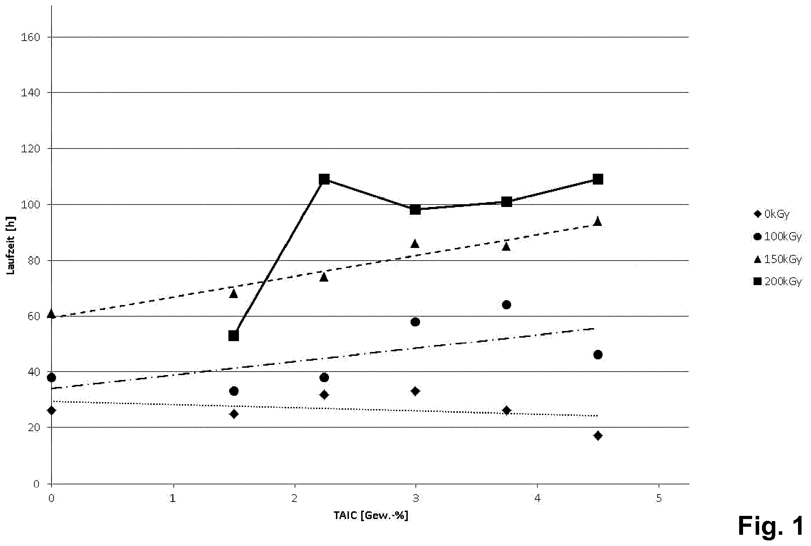

Fig. 1 ist zu entnehmen, dass bei einer Bestrahlung bis zu 150 kGy ein relativ lineares und auch erwartbares Verhalten in Hinblick auf die Erhöhung der Strahlungsdosis einerseits als auch der Erhöhung des Triallylisocyanurats festzustellen war, wobei in keinem Fall eine Laufzeit von über 100 h erreicht wurde. Bei einer Strahlungsdosis von 200 kGy, deren Graph in Fig. 1 nicht gemittelt zur Verdeutlichung wiedergegeben ist im Unterschied zu den Graphen bei Strahlungsdosen von 0 kGy, 100 kGy und 150 kGy, liegt zunächst etwas überraschend die Laufzeit bei einer Menge von 1,5 Gew.-% Triallylisocyanurat unterhalb derjenigen bei einer Energiedosis von 150 kGy. Es wird in einem relativ engen Bereich eine deutliche Erhöhung der Laufzeit erzielt. Dieser Bereich umfasst eine Triallylisocyanuratmenge von etwa 1,85 Gew.-% bis etwa 2,7 Gew.-%. In diesem relativ engen Bereich bei einer im Vergleich relativ geringen Menge an Triallylisocyanurat werden höhere Laufzeiten erzielt als in Fällen mit Energiedosen von 200 kGy und deutlich höheren Gehalten an Triallylisocyanurat, insbesondere von über 3 Gew.-%. Somit hat der durchgeführte Versuch überraschenderweise ergeben, dass bei Einsatz relativ hoher Elektronenstrahldosen Triallylisocyanurat in einem relativ niedrigem und engem, begrenztem Bereich hochwirksam ist im Sinne einer deutlichen Erhöhung der Laufzeit der getesteten Rollbälge.

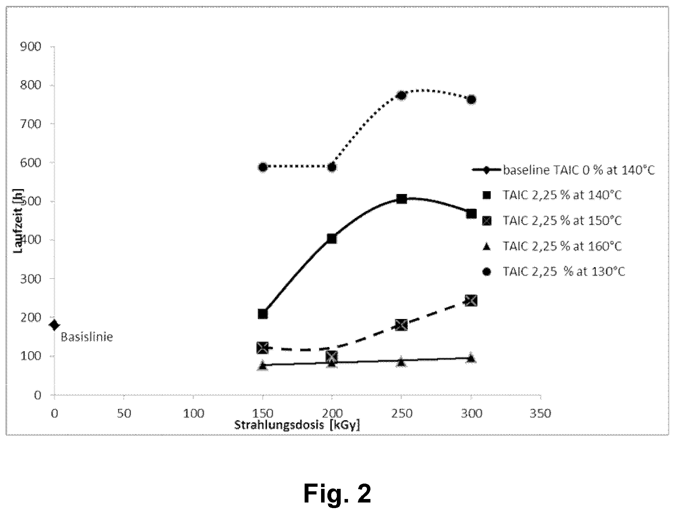

In einem weiteren Beispiel wurde wie im vorgenannten Beispiel vorgegangen, allerdings wurde nur eine Mischung des beschriebenen thermoplastischen Polymers mit stets 2,25 Gew.% Triallylisocyanurat im Vergleich zu einem Vergleichsbeispiel ohne Zugabe von Triallylisocyanurat untersucht. Im Unterschied zu dem vorstehenden Beispiel wurde eine Abwinkelung von 3° und eine Drehzahl von 6.000 rpm verwendet. Es wurde bei verschiedenen Temperaturen und Strahlungsdosen bis 300 kGy die Laufzeit wie vorbeschrieben ermittelt. Fig. 2 zeigt die Ergebnisse dieses Beispiels. Insbesondere in einem Bereich zwischen etwa 220 kGy und etwa 280 kGy sind bei 130°C und 140°C hohe Laufzeiten von bis zu fast 800h erzielbar. Aber auch bei höheren Temperaturen von 150°C ist bei Strahlungsdosen ab etwa 250kGy eine Verbesserung gegenüber einer Basislinie ohne Triallylcyanurat festzustellen.

Mit der vorliegenden Erfindung wird ein Verfahren als auch ein Balg zur Verfügung gestellt, mittels welchem bei erhöhten Temperaturen von 120°C und höher, die bei modernen Gelenkkonstruktionen, insbesondere in Hinblick auf die Elektromobilisierung von Automobilen, auftreten, geeignete Eigenschaften in Hinblick auf deren Festigkeit aufweisen und dabei gleichzeitig auch eine hinreichend hohe Lebensdauer zur Verfügung stellen.

## Patentansprüche

1. Verfahren zur Herstellung eines Balges aus einer Mischung umfassend mindestens ein thermoplastisches Elastomer, ausgewählt aus der Gruppe der Copolyester mit einem harten Segment und einem weichen Segment, wobei in einem ersten Schritt das mindestens eine thermoplastische Elastomer mit 0,8 Gew.-% bis 5 Gew.-% Triallylisocyanurat, bezogen auf die Gesamtmenge der Mischung, gemischt wird; in einem zweiten Schritt der Balg hergestellt wird; und der Balg in einem dritten Schritt einer ionisierenden Strahlung in einem Bereich von 140 kGy bis 350 kGy ausgesetzt wird.

2. Verfahren gemäß Anspruch 1, **dadurch gekennzeichnet, dass** das weiche Segment des mindestens einen thermoplastischen Elastomers Einheiten von 2 bis 8 Kohlenstoffatomen umfasst.

3. Verfahren gemäß einem oder mehreren der vorhergehenden Ansprüche, **dadurch gekennzeichnet, dass** das weiche Segment ein Polyether ist, ausgewählt aus der Gruppe der Alkylenoxide mit 2 bis 8 Kohlenstoffatomen.

4. Verfahren gemäß einem oder mehreren der vorhergehenden Ansprüche, **dadurch gekennzeichnet, dass** das harte Segment Polybutylenterephthalat oder Polyethylenterephthalat ist.

5. Verfahren gemäß einem oder mehreren der vorhergehenden Ansprüche, **dadurch gekennzeichnet, dass** im ersten Schritt genau ein thermoplastisches Elastomer eingesetzt wird.

6. Verfahren gemäß einem oder mehreren der vorhergehenden Ansprüche, **dadurch gekennzeichnet, dass** die Herstellung des Balges im zweiten Schritt mittels Pressblower-Spritzblasverfahren, Spritzextrusionsverfahren, Spritzgussverfahren, Spritzpressverfahren und/oder Extrusionsblasverfahren erfolgt.

7. Verfahren gemäß einem oder mehreren der vorhergehenden Ansprüche, **dadurch gekennzeichnet, dass** die Herstellung des Balges im zweiten Schritt bei einer Temperatur in einem Bereich von 170°C bis 250°C erfolgt.

8. Verfahren gemäß einem oder mehreren der vorhergehenden Ansprüche, **dadurch gekennzeichnet, dass** die Aussetzung im dritten Schritt mit mindestens einem ionisierenden Strahl mit einer Energie in einem Bereich von 5 MeV bis 15 MeV erfolgt.

9. Verfahren gemäß einem oder mehreren der vorhergehenden Ansprüche, **dadurch gekennzeichnet, dass** die Aussetzung im dritten Schritt mit mindestens einem ionisierenden Strahl schrittweise in Strahlungsdosen in einem Bereich von 20 kGy bis 40 kGy erfolgt.

10. Balg, insbesondere ein Faltenbalg oder ein Rollbalg, hergestellt gemäß dem Verfahren nach einem oder mehreren der Ansprüche 1 bis 9.

## Claims

1. Method for producing a boot from a mixture comprising at least one thermoplastic elastomer, selected from the group of copolyesters that have a hard segment and a soft segment, wherein the at least one thermoplastic elastomer is mixed in a first step with 0.8 wt.-% to 5 wt.-% triallyl isocyanurate, based on the total amount of the mixture; in a second step, the boot is produced; and in a third step, the boot is exposed to ionizing radiation in a range of 140 kGy to 350 kGy.

2. Method according to claim 1, **characterized in that** the soft segment of the at least one thermoplastic elastomer comprises units of 2 to 8 carbon atoms.

3. Method according to one or more of the preceding claims, **characterized in that** the soft segment is a polyether, selected from the group of alkylene oxides with 2 to 8 carbon atoms.

4. Method according to one or more of the preceding claims, **characterized in that** the hard segment is polybutylene terephthalate or polyethylene terephthalate.

5. Method according to one or more of the preceding claims, **characterized in that** exactly one thermoplastic elastomer is used in the first step.

6. Method according to one or more of the preceding claims, **characterized in that** the production of the boot in the second step takes place by means of a pressure blower-injection blowing process, injection extrusion process, injection molding process, transfer molding process, and/or an extrusion blowing process.

7. Method according to one or more of the preceding claims, **characterized in that** the production of the boot in the second step takes place at a temperature in a range of 170° C to 250° C.

8. Method according to one or more of the preceding claims, **characterized in that** the exposure in the third step takes place with at least one ionizing beam with an energy in a range of 5 MeV to 15 MeV.

9. Method according to one or more of the preceding claims, **characterized in that** the exposure in the third step takes place incrementally with at least one ionizing beam in radiation doses ranging from 20 kGy to 40 kGy.

10. Boot, in particular a convoluted boot or a rolling boot, produced in accordance with the method according to one or more of the claims 1 to 9.

## Revendications

1. Procédé de fabrication d'un soufflet à partir d'un mélange comprenant au moins un élastomère thermoplastique choisi dans le groupe des copolyesters avec un segment dur et un segment mou, dans lequel, dans une première étape, ledit au moins un élastomère thermoplastique est mélangé avec 0,8 % à 5 % en poids d'isocyanurate de triallyle par rapport à la quantité totale dudit mélange; dans une deuxième étape, ledit soufflet est fabriqué; et dans une troisième étape, ledit soufflet est exposé à un rayonnement ionisant dans une plage de 140 kGy à 350 kGy.

2. Procédé selon la revendication 1, **caractérisé en ce que** ledit segment mou dudit au moins un élastomère thermoplastique comprend des unités de 2 à 8 atomes de carbone.

3. Procédé selon une ou plusieurs des revendications précédentes, **caractérisé en ce que** ledit segment mou est un polyéther choisi dans le groupe des oxydes d'alkylène avec 2 à 8 atomes de carbone.

4. Procédé selon une ou plusieurs des revendications précédentes, **caractérisé en ce que** ledit segment dur est du polytéréphtalate de butylène ou du polytéréphtalate d'éthylène.

5. Procédé selon une ou plusieurs des revendications précédentes, **caractérisé en ce qu'**exactement un élastomère thermoplastique est utilisé dans la première étape.

6. Procédé selon une ou plusieurs des revendications précédentes, **caractérisé en ce que** ladite fabrication dudit soufflet dans ladite deuxième étape est réalisée au moyen d'un procédé d'injection-soufflage Pressblower, d'un procédé d'injection-extrusion, d'un moulage par injection, d'un moulage par transfert et/ou d'un procédé d'extrusion-soufflage.

7. Procédé selon une ou plusieurs des revendications précédentes, **caractérisé en ce que** ladite fabrication dudit soufflet dans ladite deuxième étape est effectuée à une température dans une plage de 170°C à 250°C.

8. Procédé selon une ou plusieurs des revendications précédentes, **caractérisé en ce que** ladite exposition dans ladite troisième étape est réalisée avec au moins un rayonnement ionisant ayant une énergie dans une plage de 5 MeV à 15 MeV.

9. Procédé selon une ou plusieurs des revendications précédentes, **caractérisé en ce que** ladite exposition à au moins un rayonnement ionisant dans ladite troisième étape est réalisée par paliers à des doses de rayonnement allant de 20 kGy à 40 kGy.

10. Soufflet, en particulier un soufflet plissé ou un soufflet roulant, fabriqué selon le procédé selon une ou plusieurs des revendications 1 à 9.
